# EUROPEAN PATENT SPECIFICATION

(11) **EP 4 249 170 B1**
(45) Date of publication and mention of the grant of the patent: **13.05.2026**
(21) Application number: 20962362.8
(22) Date of filing: 17.11.2020
(51) Int. Cl.: G05B 19/4093, B23Q 41/00, B23Q 3/155, B23Q 17/09

(54) **TOOL TRANSPORT SYSTEM, CONTROL METHOD FOR TOOL TRANSPORT SYSTEM, AND CONTROL PROGRAM FOR TOOL TRANSPORT SYSTEM**
WERKZEUGTRANSPORTSYSTEM, STEUERUNGSVERFAHREN FÜR WERKZEUGTRANSPORTSYSTEM UND STEUERUNGSPROGRAMM FÜR WERKZEUGTRANSPORTSYSTEM
SYSTÈME DE TRANSPORT D'OUTILS, PROCÉDÉ DE COMMANDE POUR SYSTÈME DE TRANSPORT D'OUTILS ET PROGRAMME DE COMMANDE POUR SYSTÈME DE TRANSPORT D'OUTILS

(43) Date of publication of application: 27.09.2023
(73) Proprietor: DMG Mori Co., Ltd., Yamatokoriyama-shi, Nara 639-1160 (JP)
(72) Inventor: YASUGI, Eisuke, Yamatokoriyama-shi, Nara 639-1160 (JP)
(74) Representative: Isarpatent
(86) International application number: PCT/JP2020/042777
(87) International publication number: WO 2022/107198

(56) References cited:
- JP-A- 2013 022 661
- JP-A- H03 221 340
- JP-A- H10 100 033
- JP-A- H11 156 657
- JP-A- S63 105 852
- JP-B1- 6 775 704

## Description

### TECHNICAL FIELD

The present disclosure relates to a technique for transporting a tool holder in a tool transport system.

### BACKGROUND ART

An increased number of companies have administered a plurality of machine tools. As the number of machine tools to be administered increases, it becomes difficult to manage tools used in each machine tool. In this respect, PTL 1 (WO2015/029232) discloses a tool management system that manages tools to be used in a plurality of machine tools.

### CITATION LIST

### PATENT LITERATURE

PTL 1: WO2015/029232
JP 6 775704 B1 describes a tool transport system with a tool storage device having two magazines for loading and unloading tools in a machine tool, a control device, and a transport device that can transport designated tool holders from a machine tool to the storage and vice vera. The system automates tool management among multiple machine tools.
JP 863105852 A describes a system for rearranging tools in a cartridge-type tool magazine using size classification, evaluation matrices, and a tool moving mechanism. The system aims to minimize the required steps, avoid interference, and optimize space, thus enhancing operational efficiency.
JP H03 221340 A describes a system that manages tools in a processing machine with an automatic tool changer by setting tool change levels based on usage. Tools are stored in magazine areas according to these levels, and if a specified tool is missing, it is replaced with tools from the magazine in order of decreasing change level.
JP 2013 022661 A describes a device for preparing a drill for use by a machine tool.
JP H10-100033 A describes a tool selection method for selecting a tool to be used for machining from a plurality of tools in a machine tool. JP H11-158857 A describes an oil recovery method and an oil recovery device for recovering oil floating on the water surface.

### SUMMARY OF THE INVENTION

### TECHNICAL PROBLEM

In recent years, development of a tool transport system is being advanced. The tool transport system includes a plurality of tool holders. A tool is attached to each tool holder. The tool transport system supplies a machine tool with a needed tool by automatically carrying a tool holder into the machine tool. Also, the tool transport system automatically carries a tool holder holding an unneeded tool out of the machine tool. The tool management system disclosed in PTL 1 does not relate to such a tool transport system.

The machine tool can contain not only a tool in a usable state, but also a tool in an unusable state. The number of tool holders that can be stored in a machine tool is limited. If there is a tool holder in an unusable state in a machine tool, the storage space for the tool holder will be used uselessly. Therefore, it is desired to collect the tool holders stored in the machine tool according to the priority.

### SOLUTION TO PROBLEM

In one example of the present disclosure, a tool transport system includes a machine tool, and a tool storage unit that stores a plurality of tool holders. Each of the plurality of tool holders is capable of holding a tool. The tool transport system further includes a work station for an operator to conduct an operation concerning a tool holder, a transport device that transports a designated tool holder among tool holders in the machine tool, tool holders in the tool storage unit, and tool holders in the work station, to a designated transport destination of the machine tool, the tool storage unit, and the work station, and a controller that controls the tool transport system. The controller executes a process of specifying a tool holder holding a tool in an unusable state among tool holders in the machine tool based on receiving a collection instruction for tool holder, a process of controlling the transport device so as to carry the tool holder specified in the process of specifying out of the machine tool at a higher priority than other tool holders in the machine tool, and a process of controlling the transport device so as to transport the tool holder that is carried out of the machine tool in the process of controlling to the tool storage unit or the work station.

According to the present invention, the other tool holders in the machine tool include a vacant tool holder holding no tool.

In one example of the present disclosure, the other tool holders in the machine tool include a tool holder holding a tool in a usable state. When there is no tool holder holding a tool in an unusable state in the machine tool, the controller further executes a process of controlling the transport device so as to carry the vacant tool holder out of the machine tool at a higher priority than a tool holder holding a tool in a usable state.

In one example of the present disclosure, the other tool holders in the machine tool include a tool holder holding a tool not to be used in the machine tool, and a tool holder holding a tool to be used in the machine tool. When there is no tool holder holding a tool in an unusable state and there is no vacant tool holder in the machine tool, the controller further executes a process of controlling the transport device so as to carry the tool holder holding a tool not to be used out of the machine tool at a higher priority than the tool holder holding a tool to be used.

In one example of the present disclosure, the tool holders stored in the tool storage unit include a first tool holder holding a first tool, and a second tool holder holding a second tool having a shorter residual service life than the first tool. The controller executes a process of controlling the transport device so as to carry the second tool holder into the machine tool at a higher priority than the first tool holder on the basis of receiving a carrying-in instruction for tool holder.

In other example of the present disclosure, there is provided a control method for a tool transport system. The tool transport system includes a machine tool, and a tool storage unit that stores a plurality of tool holders, and each of the plurality of tool holders is capable of holding a tool. The tool transport system further includes a work station for an operator to conduct an operation concerning a tool holder, and a transport device that transports a designated tool holder among tool holders in the machine tool, tool holders in the tool storage unit, and tool holders the work station to a designated transport destination of the machine tool, the tool storage unit, and the work station. The control method includes specifying a tool holder holding a tool in an unusable state among tool holders in the machine tool based on receiving a collection instruction for tool holder, controlling the transport device so as to carry the tool holder specified in the specifying out of the machine tool at a higher priority than other tool holders in the machine tool, and controlling the transport device so as to transport the tool holder carried out of the machine tool in the controlling to the tool storage unit or the work station.

In other example of the present disclosure, there is provided a control program for a tool transport system. The tool transport system includes a machine tool, and a tool storage unit that stores a plurality of tool holders, and each of the plurality of tool holders is capable of holding a tool. The tool transport system further includes a work station for an operator to conduct an operation concerning a tool holder, and a transport device that transports a designated tool holder among tool holders in the machine tool, tool holders in the tool storage unit, and tool holders the work station to a designated transport destination of the machine tool, the tool storage unit, and the work station. The control program makes the tool transport system execute specifying a tool holder holding a tool in an unusable state among tool holders in the machine tool based on receiving a collection instruction for tool holder, controlling the transport device so as to carry the tool holder specified in the step of specifying out of the machine tool at a higher priority than other tool holders in the machine tool, and controlling the transport device so as to transport the tool holder carried out of the machine tool in the controlling to the tool storage unit or the work station.

The foregoing and other objects, features, aspects and advantages of the present invention will become more apparent from the following detailed description of the present invention when taken in conjunction with the accompanying drawings.

### BRIEF DESCRIPTION OF DRAWINGS

Fig. 1 is a view showing an appearance of a tool transport system.
Fig. 2 is a diagram showing a configuration example of a driving mechanism of the tool transport system.
Fig. 3 is a view schematically showing the appearance of carrying a tool holder out of a machine tool.
Fig. 4 is a diagram showing one example of functional constituents of the tool transport system.
Fig. 5 is a chart showing one example of data structure of storage information.
Fig. 6 is a view schematically showing a flow of a tool holder carrying-in step from a work station to the tool storage unit.
Fig. 7 is a view schematically showing a flow of a tool holder carrying-in step from the tool storage unit to a machine tool.
Fig. 8 is a view schematically showing a flow of a tool holder carrying-out step from the machine tool to the work station.
Fig. 9 is a diagram showing one example of hardware configuration of a management device.
Fig. 10 is a block diagram showing principal hardware configuration of PLC (Programmable Logic Controller).
Fig. 11 is a diagram showing one example of hardware configuration of an operation terminal.
Fig. 12 is a flowchart showing a flow of a tool holder carrying-in process to the machine tool.
Fig. 13 is a flowchart showing a flow of a tool holder carrying-out process from the machine tool.

### DESCRIPTION OF EMBODIMENTS

Hereinafter, each embodiment according to the present invention will be described by referring to the drawings. In the following description, the same parts and constituents are denoted by the same reference numeral. The names and functions of these are also the same. Therefore, detailed description is not repeated for these. Each embodiment and each modified example described below may be appropriately and selectively combined.

### <A. Appearance of tool transport system 10>

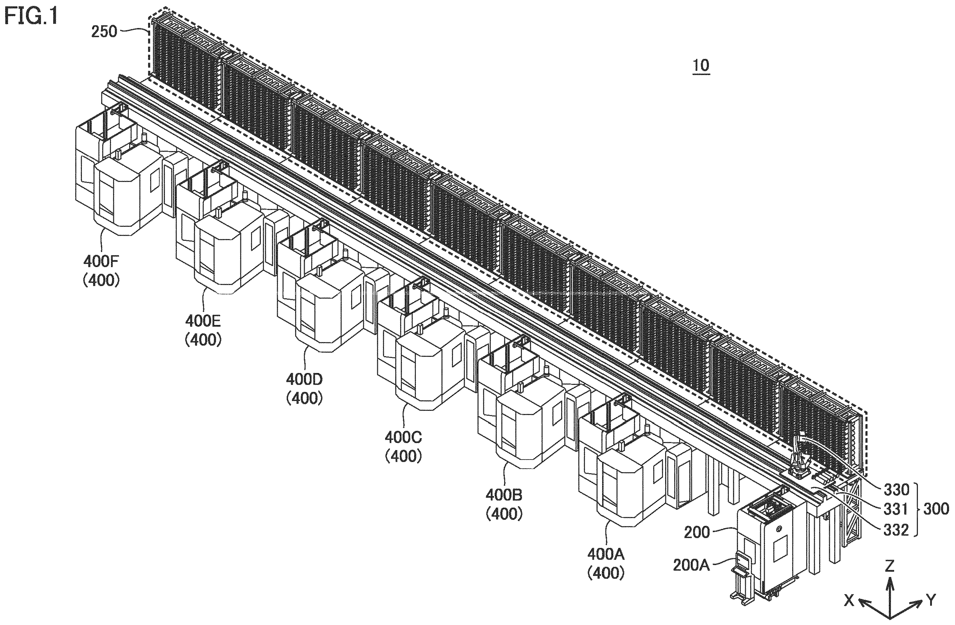

Referring to Fig. 1, a tool transport system 10 is described. Fig. 1 is a view showing an appearance of tool transport system 10.

As shown in Fig. 1, tool transport system 10 includes a work station 200, a tool storage unit 250, a transport device 300, and a machine tool 400.

Work station 200 is a place where the operator carries out the operation concerning a tool holder. A tool holder is a pot configured to be capable of holding a tool. The operator carries out, for example, a tool holder setting operation, or a tool holder collecting operation in work station 200. Work station 200 includes an operation terminal 200A. Operation terminal 200A receives various operations to tool transport system 10.

Tool storage unit 250 stores a plurality of tool holders. Typically, tool storage unit 250 is disposed in parallel with a rail 331.

Transport device 300 transports a designated tool holder among tool holders in work station 200, tool holders in tool storage unit 250, and tool holders in machine tool 400 to a designated transport destination of work station 200, tool storage unit 250, and machine tool 400.

Hereinafter, the transport mode that transport device 300 transports a tool holder from work station 200 to tool storage unit 250 or machine tool 400, or the transport mode that transport device 300 transports a tool holder from tool storage unit 250 to machine tool 400 is also referred to as "carrying-in".

Also, the transport mode that transport device 300 transports a tool holder from tool storage unit 250 or machine tool 400 to work station 200, or the transport mode that transport device 300 transports a tool holder from machine tool 400 to tool storage unit 250 is also referred to as "carrying-out".

The "transport device" referred in the present description is a concept including various devices having the function of transporting a tool holder. That is, transport device 300 transports a tool via a tool holder. Hereinafter, description is made for a four to seven-axis driven multi joint robot as one example of transport device 300, however, transport device 300 is not limited to the multi joint robot. As one example, transport device 300 may be a two to three-axis driven orthogonal robot (autoloader). Alternatively, transport device 300 may be a self-propelled robot.

Transport device 300 includes an arm robot 330, a rail 331, and a carriage 332. Arm robot 330 is fixed on carriage 332. Carriage 332 is capable of moving on rail 331. Tool storage unit 250 and machine tool 400 are arranged in parallel with each other along rail 331 to sandwich rail 331 therebetween. Transport device 300 transports a tool holder between work station 200 and tool storage unit 250, and transports a tool holder between tool storage unit 250 and machine tool 400.

Machine tool 400 is one of transport destinations for tool holder by transport device 300. While Fig. 1 shows six machine tools 400A to 400F as machine tool 400, the number of machine tool 400 provided in tool transport system 10 may be one or more. Machine tool 400 machines a workpiece using a designated tool in accordance with a machining program designed in advance.

"Machine tool" referred in the present description is concept including various devices having the function of machining a workpiece. Machine tool 400 may be a horizontal type machining center, and may be a vertical type machining center. Alternatively, machine tool 400 may be a lathe, may be an additive machine tool, and may be other cutting tool or a grinding tool.

Tool transport system 10 may further include a pallet transport system (not shown). The pallet transport system is a system for transporting a pallet on which a workpiece is placed to machine tool 400 according to a predetermined machining schedule.

### <B. Driving mechanism of tool transport system 10>

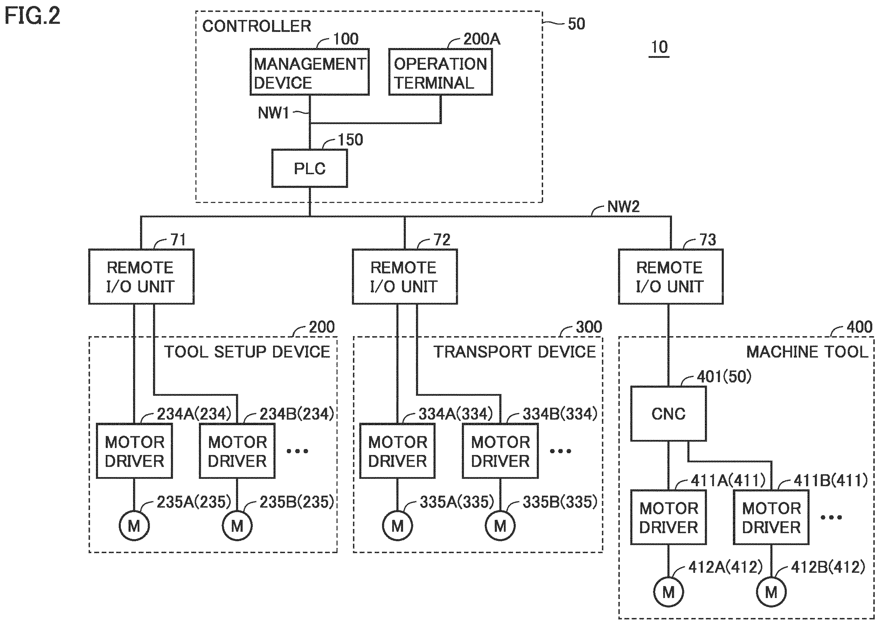

Next, referring to Fig. 2, various driving mechanisms in tool transport system 10 are described. Fig. 2 is a diagram showing a configuration example of a driving mechanism of tool transport system 10.

As shown in Fig. 2, tool transport system 10 includes a controller 50, remote I/O (Input/Output) units 71 to 73, work station 200, transport device 300, and machine tool 400.

"Controller 50" referred in the present description means a device that controls tool transport system 10. A device configuration of controller 50 is ad libitum. Controller 50 may be configured by a single control unit and may be configured by a plurality of control units. In the example of Fig. 2, controller 50 is configured by a management device 100, a PLC 150, and operation terminal 200A described above. Also, controller 50 may include a CNC (Computer Numerical Control) 401.

Management device 100 is a main computer that manages tool transport system 10. Management device 100 may be configured by a single computer, or may be configured by a plurality of computers. As one example, management device 100 is configured by a computer responsible for tool holder transport, and a computer responsible for pallet transport.

PLC 150 controls various industrial devices for automating a machining process. Operation terminal 200A is a terminal for receiving various operations regarding carry-out and carry-in of tool holder.

Management device 100, PLC 150, and operation terminal 200A are connected to a network NW1. Management device 100, PLC 150, and operation terminal 200A may be communication connected by wire and may be communication connected wirelessly. For Network NW1, EtherNET (registered trademark) or the like is employed. Management device 100 and operation terminal 200A send a control command to PLC 150 via network NW1. According to the control command, a tool holder to be transported, a transport destination of the tool holder, start/stop of transport of the tool holder and the like are designated.

Remote I/O units 71 to 73 and PLC 150 are connected to network NW2. As network NW2, it is preferred to employ a field network that conducts fixed-cycle communication with which data arrival time is ensured. As such a field network that conducts fixed-cycle communication, for example, EtherCAT (registered trademark), EtherNet/IP (registered trademark), CC-Link (registered trademark), or CompoNet (registered trademark) is employed.

Work station 200 includes one or more motor driver 234, and one or more motor 235. In the example of Fig. 2, two motor drivers 234A, 234B and two motors 235A, 235B are shown.

In work station 200 or in the vicinity of work station 200, remote I/O unit 71 is disposed. Remote I/O unit 71 mediates data exchange between various driving units (for example, motor driver 234) inside work station 200, and PLC 150. As one example, motor driver 234 receives a control command at a fixed cycle from PLC 150 via remote I/O unit 71, and controls driving of motor 235 according to the control command.

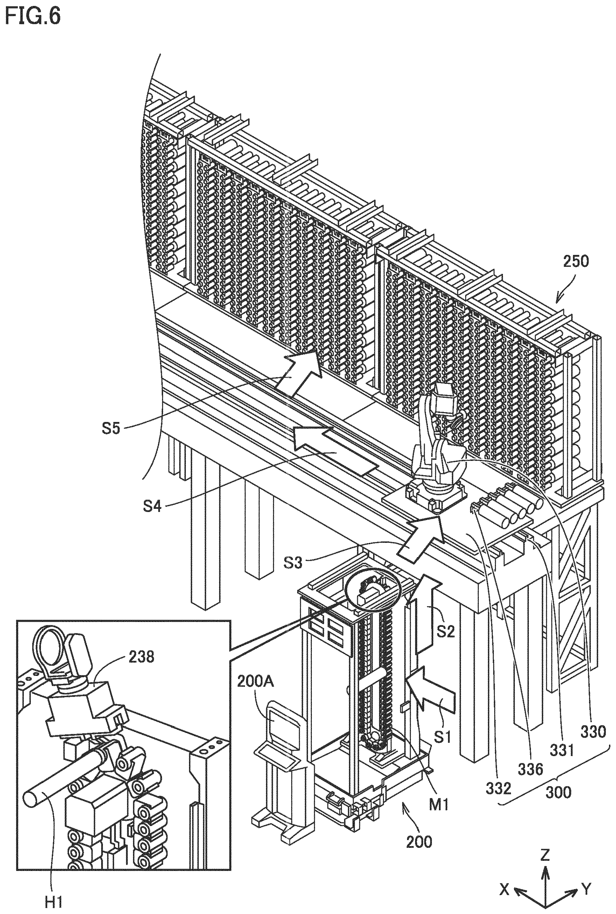

Motor 235A controls, for example, driving of a later-described magazine M1 (see Fig. 6). Motor 235B controls, for example, driving of an ATC (Automatic Train Control) in work station 200.

Motor driver 234 may be, for example, a driver for servo motor, and may be a driver for stepping motor. Motor 235 may be a servo motor, and may be a stepping motor.

Transport device 300 includes one or more motor driver 334, and one or more motor 335. In the example of Fig. 2, two motor drivers 334A, 334B and two motors 335A, 335B are shown.

Inside transport device 300 or in the vicinity of transport device 300, remote I/O unit 72 is disposed. Remote I/O unit 72 mediates data exchange between various driving units (for example, motor driver 334) inside transport device 300, and PLC 150. As one example, motor driver 334 receives a control command at a fixed cycle from PLC 150 via remote I/O unit 72, and controls driving of motor 335 according to the control command.

Motor 335A controls, for example, driving of carriage 332 (see Fig. 1) described above. Motor 335B controls, for example, driving of arm robot 330 (see Fig. 1). Motor 335B is provided in accordance with the number of joints of arm robot 330.

Motor driver 334 may be, for example, a driver for servo motor, and may be a driver for stepping motor. Motor 335 may be a servo motor, and may be a stepping motor.

Machine tool 400 includes CNC 401, one or more motor driver 411, and one or more motor 412. In the example of Fig. 2, two motor drivers 411A, 411B and two motors 412A, 412B are shown.

Inside machine tool 400 or in the vicinity of machine tool 400, remote I/O unit 72 is disposed. Remote I/O unit 72 mediates data exchange between various driving units (for example, CNC 401) inside machine tool 400, and PLC 150. Likewise motor driver 334, motor driver 411 receives a control command at a fixed cycle from PLC 150 via remote I/O unit 72, and controls driving of motor 412 according to the control command.

Motor 412A drives, for example, a main shaft capable of attachment of a tool in the axial direction of the main shaft. Motor 412B rotationally drives, for example, a main shaft in the rotary direction about the axial direction of the main shaft.

Motor driver 411 may be, for example, a driver for servo motor, and may be a driver for stepping motor. Motor 412 may be a servo motor, and may be a stepping motor.

### <C. Outline>

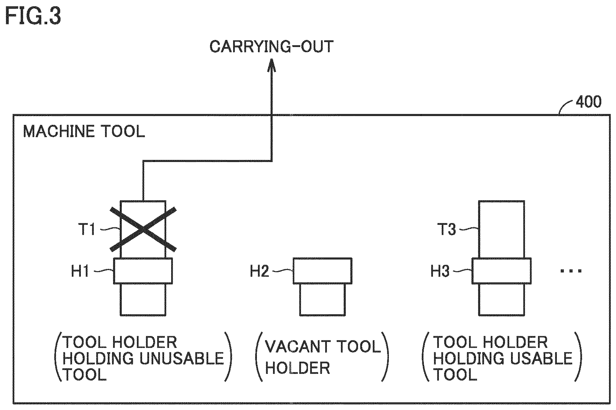

Referring to Fig. 3, outline of a collecting process of tool holder is described. Fig. 3 is a view schematically showing the appearance of carrying a tool holder out of machine tool 400.

There is a possibility that machine tool 400 stores a tool holder holding a tool in an unusable state, a vacant tool holder holding no tool and so on, as well as a tool holder holding a tool in a usable state.

"Tool in an unusable state" means an abnormal tool that cannot be used for machining in machine tool 400. As one example, the tool in an unusable state includes a tool whose service life has ended due to wear or the like, and a tool in which a damage is generated. Examples of kinds of damage in tool include deformation due to exertion of large force, chipping of tool, and fracture of tool, and the like.

In contrast, "tool in a usable state" means tools other than tools in an unusable state, and means a tool in a normal state that can be used for machining in machine tool 400.

In the example of Fig. 3, a tool holder H1 holding a tool T1 in an unusable state, a vacant tool holder H2 holding no tool, and a tool holder H3 holding a tool T3 in a usable state are stored in machine tool 400.

The number of tool holders that can be stored in machine tool 400 is limited. When there is a tool holder holding a tool in an unusable state in tool transport system 10, the storage space for the tool holder is used uselessly. In light of this, tool transport system 10 collects tool holder H1 holding a tool in an unusable state from machine tool 400 at a higher priority than other tool holders H2, H3 when receiving a tool holder collection instruction.

More specifically, controller 50 of tool transport system 10 specifies tool holder H1 holding a tool in an unusable state among tool holders H1 to H3 in machine tool 400 on the basis of reception of a tool holder collection instruction. Next, controller 50 controls transport device 300 so as to carry the specified tool holder H1 out of machine tool 400 at a higher priority than other tool holders H2, H3. Thus, transport device 300 carries tool holder H1 out of machine tool 400. Thereafter, controller 50 controls transport device 300 so as to transport tool holder H1 carried out of machine tool 400 to work station 200 or tool storage unit 250. Thus, transport device 300 transports tool holder H1 to a designated transport destination.

By the above process, tool transport system 10 is capable of securing a storage space for tool holder in machine tool 400. Only a blade part is exchangeable for some kind of tool. The tool can be reused by changing only the damaged blade part. By collecting a tool holder holding such a tool at a higher priority, the operator can shorten the time of preparing the tool, and can reuse the tool holder quickly.

### <D. Functional constituents of tool transport system 10>

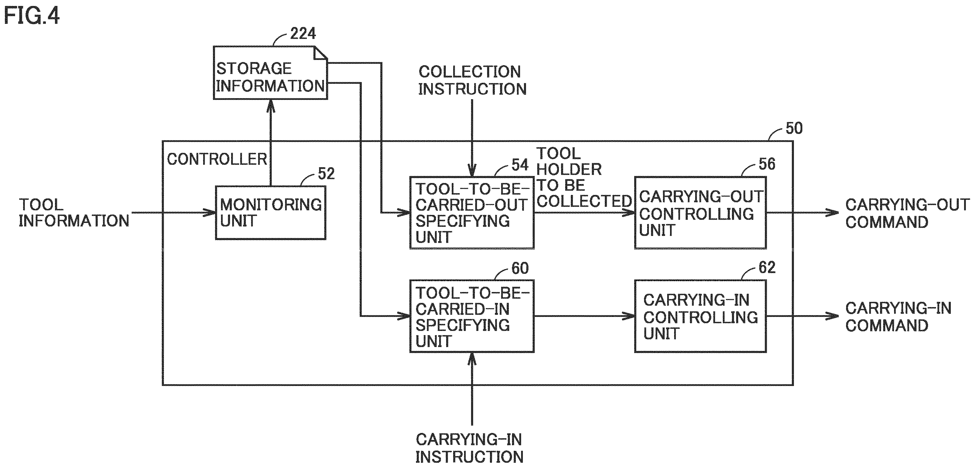

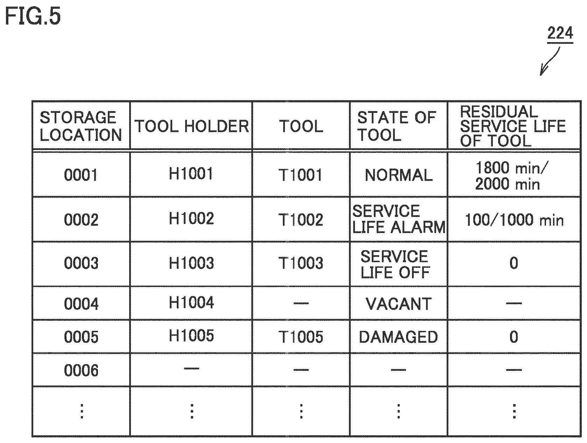

Next, referring to Fig. 4 and Fig. 5, functional constituents for realizing a transport process of tool holder are described. Fig. 4 is a diagram showing one example of functional constituents of tool transport system 10.

As shown in Fig. 4, tool transport system 10 includes a monitoring unit 52, a tool-to-be-carried-out specifying unit 54, a carrying-out controlling unit 56, a tool-to-be-carried-in specifying unit 60, and a carrying-in controlling unit 62 as functional constituents. Hereinafter, these constituents are sequentially described.

The arrangement of the functional constituents is ad libitum. Part or all of the functional constituents shown in Fig. 4 may be implemented in management device 100 (see Fig. 2) described above, may be implemented in PLC 150 (see Fig. 2) described above, and may be implemented in operation terminal 200A (see Fig. 2) described above, or may be implemented in CNC 401 (see Fig. 2) described above. As one example, monitoring unit 52 is implemented in CNC 401. Tool-to-be-carried-out specifying unit 54, carrying-out controlling unit 56, tool-to-be-carried-in specifying unit 60, and carrying-in controlling unit 62 are implemented, for example, in management device 100 or operation terminal 200A.

### (D1. Monitoring unit 52)

First, referring to Fig. 5, function of monitoring unit 52 shown in Fig. 4 is described.

Monitoring unit 52 monitors the state of each tool holder stored in tool transport system 10, and the state of the tool held in each tool holder. As one example, monitoring unit 52 manages a storage location of each tool holder in tool transport system 10, a kind of a tool held by each tool holder, the state of the tool, and a residual service life until the service life of the tool ends, in storage information 224 shown in Fig. 5. Fig. 5 is a chart showing one example of data structure of storage information 224.

In storage information 224, a storage location of each tool holder in tool transport system 10, identification information of the tool holder stored in the storage location, identification information of a tool held by the tool holder, a state of the tool, and a residual service life of the tool are associated with each other.

### (a) Storage location defined in storage information 224

Storage location defined in storage information 224 is information for uniquely specifying the location in tool transport system 10. Typically, a storage location defined in storage information 224 is invariable.

Storage location defined in storage information 224 indicates any one of positional information in work station 200, positional information in tool storage unit 250, positional information in transport device 300, and positional information in machine tool 400.

### (b) Identification information of tool holder defined in storage information 224

Identification information of a tool holder defined in storage information 224 is information for uniquely specifying the tool holder. The identification information is preliminarily assigned to each tool holder. The identification information may be indicated by a tool holder number such as ID (Identification) and may be indicated by a tool holder name.

Monitoring unit 52 monitors transport of each tool holder in tool transport system 10, and updates the association between storage location and tool holder whenever a tool holder is transported by transport device 300. This makes it possible to specify where each tool holder is located.

### (c) Identification information of tool defined in storage information 224

Identification information of a tool defined in storage information 224 is information for uniquely specifying the tool. The identification information is preliminarily assigned to each tool. The identification information may be indicated by a tool number such as ID, and may be indicated by a tool name.

Monitoring unit 52 monitors transport of each tool holder in tool transport system 10, and updates the association between the tool held by the tool holder and storage location whenever a tool holder is transported by transport device 300.

### (d) Tool state defined in storage information 224

The tool state defined in storage information 224 indicates, for example, whether or not the tool held by the tool holder is in a usable state, or whether the tool holder holds no tool.

In the example of Fig. 5, the tool in a usable state is indicated as "normal" or "service life alarm". "Service life alarm" is an alarm indicating that the service life is going to end. As one example, monitoring unit 52 changes the tool state in storage information 224 from "normal" to "service life alarm" when the residual service life of the tool falls below a predetermined threshold. The details of the method for specifying a residual service life of tool are described later.

In the example of Fig. 5, the tool in an unusable state is indicated as "service life off", "vacant" or "damaged". As one example, monitoring unit 52 changes the tool state from "service life alarm" to "service life off" in storage information 224 on the basis that the service life of the tool becomes zero.

Whether or not the state of the tool holder is "vacant" can be set manually, for example, by user input. As one example, the user input is received at an operation terminal (not shown) provided in management device 100, operation terminal 200A described above, or machine tool 400. More specifically, when the operator pulls a tool out of a tool holder in machine tool 400, the operator designates the tool holder by user input. On the basis of this, monitoring unit 52 changes the state of the corresponding tool holder to "vacant" in storage information 224.

In other aspect, whether or not the tool holder is "vacant" can be set automatically. As one example, each tool holder is provided with a sensor for detecting whether or not a tool is attached. The sensor may be, for example, a pressure sensor, a distance sensor, or may be other sensor capable of detecting attachment and removal of tool. Monitoring unit 52 changes the state of the corresponding tool holder to "vacant" in storage information 224 on the basis that the sensor detects removal of the tool from the tool holder.

Whether or not the tool is in a "damaged" state is detected, for example, by a damage sensor provided in machine tool 400.

As one example, the damage sensor includes a pressure sensor provided in a main shaft in machine tool 400. The pressure sensor detects a force exerted on the main shaft during machining of workpiece. Monitoring unit 52 monitors an output value of the pressure sensor, and determines that an excessive force is exerted on the tool on the basis that the output value exceeds a predetermined value. Upon determination of exertion of an excessive force on the tool, monitoring unit 52 determines that there is a possibility that the tool is bent, and changes the state of the tool holder holding the corresponding tool to "damaged".

As other example, the damage sensor includes a tool contour measuring sensor. The measuring sensor is, for example, a distance sensor, a touch sensor, or other sensor capable of detecting the contour of a tool. As one example, the case of detecting a damage of a tool using a distance sensor is described. Machine tool 400 acquires time series data representing the contour of the tool from the distance sensor by rotating the tool attached to the main shaft in front of the distance sensor. Monitoring unit 52 calculates difference between the time series data and a predetermined normal value, and determines that the blade of the tool is chipped when the absolute value of the differential result exceeds a predetermined value. Monitoring unit 52 changes the state of the tool holder holding the corresponding tool to "damaged" when it determines that the blade of the tool is chipped.

As other example, the damage sensor includes a camera for photographing a tool in machine tool 400. By executing a predetermined image process for an image obtained from the camera, monitoring unit 52 determines whether or not the tool is damaged. Monitoring unit 52 changes the state of the tool holder holding the corresponding tool to "damaged" when it determines that the tool is damaged.

As one example, whether or not the damaged tool is seen in the image is recognized by using a learned model. The learned model is generated in advance by a learning process using data set for learning. The data set for learning includes a plurality of images for learning in which a tool is seen. Each image for learning is associated with a label indicating whether or not a normal tool is seen (or a label indicating the kind of damage). An internal parameter of the learned model is optimized in advance by a learning process using such a data set for learning.

In the learning technique for generating the learned model, various machine learning algorithms can be employed. As one example, deep learning, convolution neural network (CNN), fully convolutional neural network (FCN), support vector machine and the like are employed as the machine learning algorithms.

Monitoring unit 52 sequentially inputs partial images in the rectangular regions to the learned model while the predetermined rectangular region is shifted on the input image obtained from the camera. As a result, the learned model outputs the probability at which the damaged tool is seen in the input partial image. Monitoring unit 52 determines that a damaged tool is seen in the partial image for which the probability exceeds a predetermined value.

### (e) Residual service life of tool defined in storage information 224

Monitoring unit 52 monitors a machining program of machine tool 400, and determines whether or not each tool is used in machining. Monitoring unit 52 count downs the residual service life shown in storage information 224 for the tool being used. The residual service life of a new tool is predetermined for each tool.

The "residual service life" used herein means a remaining usable quantity of the tool until the tool becomes unusable. The term "quantity" is the concept including time, distance, and number of times. That is, "remaining usable quantity of tool" is concept including a remaining usable time of tool until end of the tool service life, a remaining movable distance of tool until end of the tool service life, and a remaining usable number of times of tool until end of the tool service life.

One example of a method for monitoring a residual service life of tool is described. A machining program of machine tool 400 is defined in G code, and includes a tool change command for designating a tool to be attached to the main shaft, and a driving command for rotation driving/feed driving the main shaft or the tool, and so on. Monitoring unit 52 specifies the kind of tool to be used in machining of workpiece in advance on the basis of the tool change command defined in the machining program. Next, monitoring unit 52 starts count downing the residual service life of the tool on the basis that the driving command defined in the machining program is executed. Subsequently, monitoring unit 52 stops counting down the residual service life of the tool on the basis that the stopping command or the command of the last line defined in machining program is executed. In this manner, monitoring unit 52 monitors the residual service life of each tool in storage information 224.

### (D2. Tool-to-be-carried-out specifying unit 54)

Next, referring to the above Fig. 5, function of tool-to-be-carried-out specifying unit 54 shown in Fig. 4 is described.

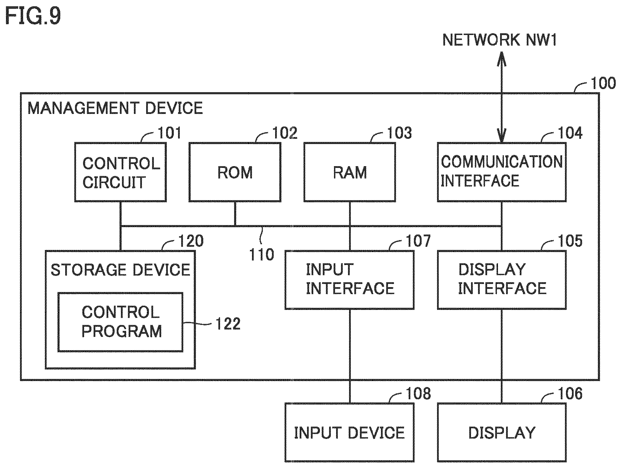

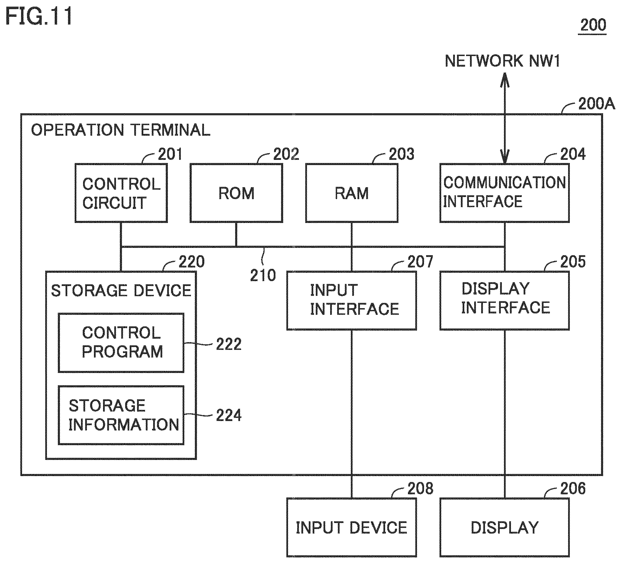

Tool-to-be-carried-out specifying unit 54 specifies a tool holder to be collected among tool holders stored in machine tool 400 on the basis of receiving a collection instruction for tool holder. As one example, the collection instruction is received at various input devices such as a later-described input device 108 (see Fig. 9), a later-described input device 208 (see Fig. 11) and the like.

The tool holder to be collected is determined according to a predetermined priority order. As one example, the tool holder having the highest priority of collection is a tool holder holding a tool in an unusable state. The tool holder having the second highest priority of collection is a vacant tool holder holding no tool. The tool holder having the third highest priority of collection is a tool holder holding a tool in a usable state.

More specifically, tool-to-be-carried-out specifying unit 54 specifies a tool holder holding a tool in an unusable state as a tool holder to be collected by reference to storage information 224 described above. When there are a plurality of such tool holders, tool-to-be-carried-out specifying unit 54 determines a tool holder to be collected according to a predetermined rule. As one example, tool-to-be-carried-out specifying unit 54 randomly determines a tool holder to be collected among tool holders that hold a tool in an unusable state. As other example, tool-to-be-carried-out specifying unit 54 determines a tool holder at a shortest distance from transport device 300 as a tool holder to be collected, among tool holders that hold a tool in an unusable state.

When there is no tool holder holding a tool in an unusable state in machine tool 400, tool-to-be-carried-out specifying unit 54 specifies a vacant tool holder holding no tool as a tool holder to be collected by reference to storage information 224 described above. When there are a plurality of vacant tool holders, tool-to-be-carried-out specifying unit 54 determines a tool holder to be collected according to a predetermined rule. As one example, tool-to-be-carried-out specifying unit 54 randomly determines a tool holder to be collected among the vacant tool holders. As other example, tool-to-be-carried-out specifying unit 54 determines a tool holder at a shortest distance from transport device 300 as a tool holder to be collected, among the vacant tool holders.

When there is no tool holder holding a tool in an unusable state and there is no vacant tool holder in machine tool 400, tool-to-be-carried-out specifying unit 54 specifies a tool holder holding a tool in a usable state as a tool holder to be collected by reference to storage information 224 described above. When there are a plurality of such tool holders, tool-to-be-carried-out specifying unit 54 determines a tool holder to be collected according to a predetermined rule.

In this case, tool-to-be-carried-out specifying unit 54 determines a tool holder to be collected on the basis of whether or not the tool is to be used. As one example, tool-to-be-carried-out specifying unit 54 determines a tool holder holding a tool not to be used in machine tool 400 as a tool holder to be collected at a higher priority than a tool holder holding a tool to be used in machine tool 400.

Whether or not a certain tool is to be used is determined, for example, on the basis of a machining program of machine tool 400. The machining program defines a command code for invoking a tool to be used. The command code is, for example, a T code for designating a tool to be attached to the main shaft. Tool-to-be-carried-out specifying unit 54 specifies the tool to be used in machining of each workpiece by searching the machining program for the T code. Next, tool-to-be-carried-out specifying unit 54 specifies a tool holder holding the specified tool as a tool holder to be used, and specifies a tool holder holding a tool other than the tool as a tool holder not to be used.

Preferably, when there are a plurality of tool holders holding a tool to be used, tool-to-be-carried-out specifying unit 54 determines the tool holder whose scheduled use time is latest as a tool holder to be collected. The scheduled use time can be specified, for example, on the basis of a machining schedule. The machining schedule may be input by a user, and may be automatically generated from a machining program to be executed or the like. As one example, the machining schedule defines a machining schedule of workpiece in each machine tool 400, and the order of tools to be used in each machining step.

In the above description, the case of determining a tool holder to be collected on the basis of whether or not the tool is to be used has been described, however, the tool holder to be collected may be determined on the basis of the residual service life of the tool. In this case, tool-to-be-carried-out specifying unit 54 determines a tool holder holding a tool having a longer residual service life as a tool holder to be collected at a higher priority. Accordingly, the tool having a shorter residual service life remains in machine tool 400 and is to be used at a higher priority. As a result, it is possible to avoid the situation that there are a large number of tools having a short residual service life in machine tool 400.

### (D3. Carrying-out controlling unit 56)

Next, referring to the above Fig. 5, function of carrying-out controlling unit 56 shown in Fig. 4 is described.

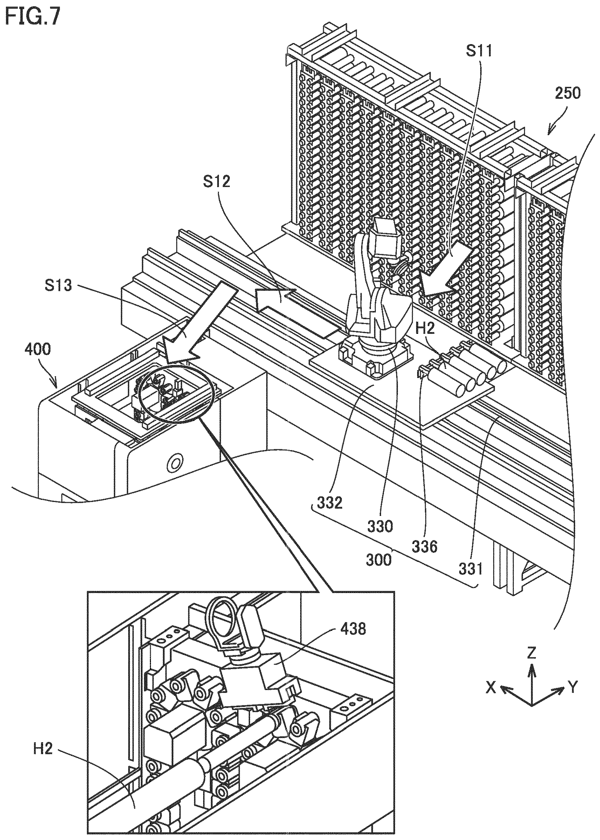

Carrying-out controlling unit 56 controls transport device 300 so as to carry the tool holder specified as a tool holder to be collected by tool-to-be-carried-out specifying unit 54 out of machine tool 400. Accordingly, transport device 300 moves to the front of machine tool 400 that retains the tool holder to be collected. Thereafter, transport device 300 receives the tool holder to be collected from machine tool 400 via a later-described ATC 438 (see Fig. 7) provided in machine tool 400.

Thereafter, carrying-out controlling unit 56 controls transport device 300 such that the tool holder carried out of machine tool 400 is directly or indirectly transported to work station 200. That is, the tool holder to be collected may be transported directly to work station 200 from machine tool 400, and may be temporarily stored in tool storage unit 250 and then transported indirectly to work station 200.

### (D4. Tool-to-be-carried-in specifying unit 60)

Next, referring to the above Fig. 5, function of tool-to-be-carried-in specifying unit 60 shown in Fig. 4 is described.

Tool-to-be-carried-in specifying unit 60 specifies a tool holder to be carried into machine tool 400 from work station 200 or tool storage unit 250 on the basis of receiving a carrying-in instruction for tool holder. The carrying-in instruction for tool holder includes, for example, designation of machine tool 400 that is a carrying-in destination, and designation of a kind of tool to be carried-in.

The carrying-in instruction for tool holder is received at various input devices such as a later-described input device 108 (see Fig. 9), a later-described input device 208 (see Fig. 11) and the like. Alternatively, the carrying-in instruction may be issued by execution of a specific code in a machining program of machine tool 400.

When there are a plurality the same kind of tools to be carried-in, tool-to-be-carried-in specifying unit 60 determines a tool holder to be carried-in on the basis of the residual service life of the tool. As one example, tool-to-be-carried-in specifying unit 60 determines a tool holder holding a tool having a shorter residual service life as a tool holder to be carried-in. The residual service life of the tool is specified, for example, on the basis of storage information 224.

As one example, it is assumed that work station 200 or tool storage unit 250 stores a first tool holder holding a first tool of kind "A", and a second tool holder holding a second tool of kind "A". Also, it is assumed that the residual service life of the second tool is shorter than the residual service life of the first tool. In this case, tool-to-be-carried-in specifying unit 60 determines the second tool holder rather than the first tool holder as a tool holder to be carried-in on the basis of receiving the carrying-in instruction for tool of kind "A". Accordingly, the tool holder holding a tool having a short residual service life is carried into machine tool 400 at a higher priority. As a result, the tool having a short residual service life is used in machining at a higher priority, and it is possible to avoid the situation that there are a large number of tools having a short residual service life in tool transport system 10.

### (D5. Carrying-in controlling unit 62)

Next, referring to the above Fig. 5, function of carrying-in controlling unit 62 shown in Fig. 4 is described.

Carrying-in controlling unit 62 controls transport device 300 so as to carry the tool holder that is specified as a tool holder to be carried-in by tool-to-be-carried-in specifying unit 60 into machine tool 400 from work station 200 or tool storage unit 250. Accordingly, transport device 300 moves to the front of the storage location of the tool holder to be carried-in. Thereafter, transport device 300 grips the tool holder in the storage location, and moves to the front of the designated machine tool 400. Next, transport device 300 carries the tool holder to be carried-in into machine tool 400 via a later-described ATC 438 (see Fig. 7).

### <E. Tool carrying-in step into tool storage unit 250>

Next, referring to Fig. 6, a carrying-in step of a tool holder from work station 200 to tool storage unit 250 is described. Fig. 6 is a view schematically showing a flow of a tool holder carrying-in step from work station 200 to tool storage unit 250.

In step S1, an operator sets a tool holder H1 to be carried-in in a magazine M1. Near the position to which tool holder H1 is to be set, a reading device (not shown) for a bar code or a QR code (registered tradename) is provided, and the reading device reads a bar code or a QR code given to tool holder H1. Thus, identification information of tool holder H1 to be carried-in is read. Upon completion of the setting of tool holder H1, the operator performs completion operation on operation terminal 200A.

Next, in step S2, controller 50 controls motor 235A (see Fig. 2), and drives magazine M1 in work station 200. Thus, controller 50 moves tool holder H1 to be carried-in to a predetermined tool change position. In the vicinity of the tool change position, an ATC 238 is provided. ATC 238 detaches tool holder H1 at the tool change position from magazine M1 and makes a half turn.

Next, in step S3, arm robot 330 detaches tool holder H1 from ATC 238, and places the tool holder H1 on a temporary placing area 336 on carriage 332. When there is other tool holder to be carried-in, the process of steps S1 to S3 is repeated unless the maximum number of storage of temporary placing area 336 is exceeded.

Next, in step S4, controller 50 controls motor 335A, and drives carriage 332. Thus, controller 50 moves carriage 332 to an instructed tool carrying-in position. The tool carry-in position is determined, for example, on the basis of storage information 224 (see Fig. 5) described above.

Controller 50 determines a storage destination of tool holder H1 by referring to a vacant storage location defined in storage information 224. When there are a plurality of vacant storage locations, controller 50 may determine one storage location randomly selected from the plurality of vacant storage locations as a storage destination, and may determine one storage location located closer to transport device 300 selected from the plurality of vacant storage locations as a storage destination.

Next, in step S5, arm robot 330 detaches tool holder H1 to be carried-in from temporary placing area 336, and stores tool holder H1 in the determined storage destination. Thereafter, controller 50 associates identification information of tool holder H1 with the corresponding storage location, and updates storage information 224.

When other tool holder to be carried-in is left on temporary placing area 336, controller 50 repeats the process of steps S4, S5 until there is no tool holder on temporary placing area 336.

### <F. Step of carrying-in tool into machine tool 400>

Next, referring to Fig. 7, a tool holder carrying-in step following Fig. 6 is described. Fig. 7 is a view schematically showing a flow of a tool holder carrying-in step from tool storage unit 250 to machine tool 400.

The case that controller 50 receives a carrying-in instruction for tool holder to machine tool 400 is assumed. Tool to be carried-in, and machine tool 400 that is a transport destination are designated, for example, on operation terminal 200A by an operator. When there are a plurality of tool holders that hold the tool designated by the operator in tool storage unit 250, controller 50 functions as tool-to-be-carried-in specifying unit 60 and specifies a tool holder to be carried-in. It is assumed that tool holder H2 is specified as a tool to be carried-in in the manner as described above. In this case, controller 50 specifies storage location of tool holder H2 from storage information 224 (see Fig. 5) described above. Thereafter, controller 50 drives carriage 332 by controlling motor 335A (see Fig. 2), and moves carriage 332 to the front of the storage location of tool holder H2.

Next, in step S11, arm robot 330 takes tool holder H2 to be transported out of tool storage unit 250, and places tool holder H2 on temporary placing area 336 on carriage 332.

Next, in step S12, controller 50 drives carriage 332 to the position of machine tool 400 that is a transport destination by controlling motor 335A.

Next, in step S13, arm robot 330 passes tool holder H2 to ATC 438 provided in machine tool 400 that is a transport destination. Thereafter, ATC 438 attaches tool holder H2 received from arm robot 330 to ATC 438 in machine tool 400. Thereafter, ATC 438 sets tool holder H2 in magazine in machine tool 400. Thus, tool holder H2 becomes ready to use in machine tool 400.

### <G. Step of carrying-out tool to work station 200>

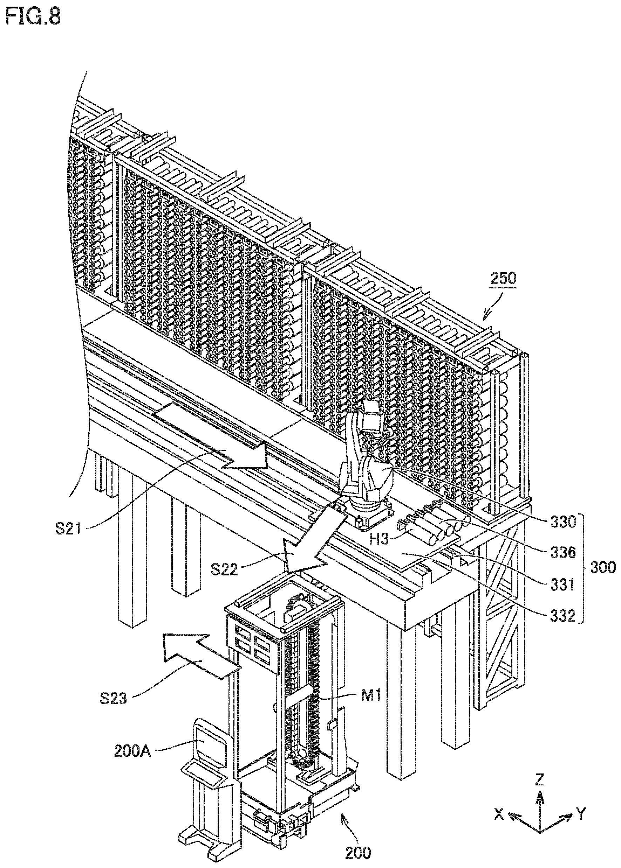

Next, referring to Fig. 8, a tool holder carrying-out step is described. Fig. 8 is a view schematically showing a flow of a tool holder carrying-out step from machine tool 400 to the work station 200.

The case that controller 50 receives a collection instruction for tool holder in a certain timing is assumed. On the basis of this, controller 50 functions as tool-to-be-carried-out specifying unit 54 described above, and specifies a tool holder to be collected among tool holders stored in machine tool 400. It is assumed that tool holder H3 is specified as a tool holder to be collected in the manner as described above. In this case, controller 50 specifies storage destination of tool holder H3 on the basis of storage information 224 (see Fig. 5) described above. Thereafter, controller 50 drives carriage 332 by controlling motor 335A (see Fig. 2) described above, and moves carriage 332 to the front of machine tool 400 storing tool holder H3. Next, arm robot 330 takes tool holder H3 out of machine tool 400, and places tool holder H3 on temporary placing area 336 on carriage 332. Also, controller 50 deletes the identification information of tool holder H3 from storage information 224, and rewrites the storage source of tool holder H3 to a vacant state.

Next, in step S21, controller 50 drives carriage 332 by controlling motor 335A described above, and moves carriage 332 to the front of work station 200.

Next, in step S22, arm robot 330 detaches tool holder H3 to be carried-out from temporary placing area 336, and attaches tool holder H3 to ATC 238 (see Fig. 6) described above provided in work station 200. Thereafter, ATC 238 attaches tool holder H3 to magazine M1 of work station 200.

Next, in step S23, controller 50 drives magazine M1 by controlling motor 235A described above, and moves tool holder H3 to be carried-out to an exit. Thereafter, the operator takes tool holder H3 to be carried-out thorough the exit.

In the example of Fig. 8, description is made for the case where the tool holder collected from machine tool 400 is carried out to work station 200, however, the tool holder may be carried out to tool storage unit 250.

### <H. Hardware configuration of management device 100>

Next, referring to Fig. 9, hardware configuration of management device 100 shown in Fig. 2 is described. Fig. 9 is a diagram showing one example of hardware configuration of management device 100.

Management device 100 includes a control circuit 101, a ROM (Read Only Memory) 102, a RAM (Random Access Memory) 103, a communication interface 104, a display interface 105, an input interface 107, and a storage device 120. These components are connected to a bus 110.

Control circuit 101 is configured, for example, by at least one integrated circuit. The integrated circuit can be configured by, for example, at least one CPU (Central Processing Unit), at least one GPU (Graphics Processing Unit), at least one ASIC (Application Specific Integrated Circuit), at least one FPGA (Field Programmable Gate Array), or combination thereof and the like.

Control circuit 101 controls operations of management device 100 by executing a control program 122 and various programs of an operating system or the like. Control circuit 101 reads out control program 122 from storage device 120 or ROM 102 to RAM 103 on the basis of reception of a command for executing control program 122. RAM 103 functions as working memory, and temporarily stores various data required for executing control program 122.

To communication interface 104, LAN (Local Area Network), antenna and the like are connected. Management device 100 is connected to network NW1 via communication interface 104. Thus, management device 100 exchanges data with an external device connected to network NW1. The external device includes, for example, PLC 150, a server (not shown) and the like.

To display interface 105, a display 106 is connected. Display interface 105 transmits an image signal for displaying an image to display 106 according to a command from control circuit 101 or the like. Display 106 displays, for example, an operation screen for receiving a collection instruction for tool holder, a selection screen for designating a tool holder to be carried-in, and so on. Display 106 is, for example, a liquid crystal display, an inorganic EL (Electro Luminescence) display, or other display device. Display 106 may be configured integrally with management device 100, and may be configured separately from management device 100.

To input interface 107, an input device 108 is connected. Input device 108 is, for example, a mouse, a keyboard, a touch panel, or other device capable of receiving an operation by a user. Input device 108 may be configured integrally with management device 100, and may be configured separately from management device 100.

Storage device 120 is, for example, a storage medium such as hard disc or flush memory. Storage device 120 stores control program 122 and the like. The storage location of control program 122 is not limited to storage device 120, and these may be stored in a storage area of control circuit 101 (for example, cash memory and the like), ROM 102, RAM 103, other devices (for example, server, PLC 150 or operation terminal 200A) and the like.

Control program 122 is a program for realizing part or all of the functional constituents shown in Fig. 4. Control program 122 may be provided as a part of a desired program to which it is incorporated rather than as a single program. In this case, the transport control process by control program 122 is realized in cooperation with the desired program. Such a program without some module does not apart from the scope of control program 122 according to the present embodiment. Further, part or all of the functions provided by control program 122 may be realized by dedicated hardware. Further, management device 100 may be configured in a form of a so-called cloud service in which at least one server executes part of the process of control program 122.

### <I. Hardware configuration of PLC 150>

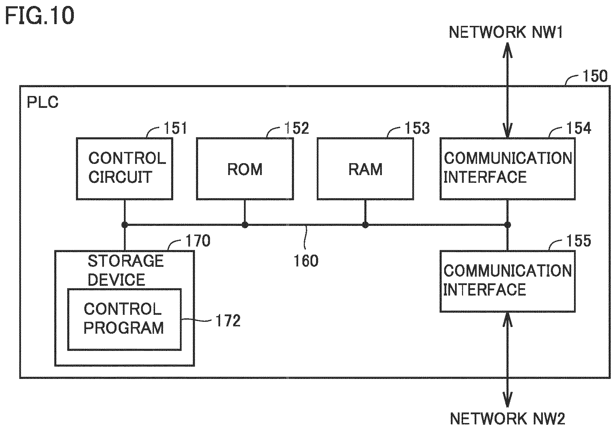

Referring to Fig. 10, one example of hardware configuration of PLC 150 shown in Fig. 2 is described. Fig. 10 is a block diagram showing a principal hardware configuration of PLC 150.

PLC 150 includes a control circuit 151, a ROM (Read Only Memory) 152, a RAM (Random Access Memory) 153, a communication interfaces 154, 155, and a storage device 170. These components are connected to a bus 160.

Control circuit 151 is configured by at least one integrated circuit. The integrated circuit is configured, for example, by at least one CPU, at least one MPU (Micro Processing Unit), at least one ASIC, at least one FPGA or combination thereof or the like.

Control circuit 151 controls operations of transport device 300, machine tool 400 and the like by executing various programs such as a control program 172. Control circuit 151 reads out control program 172 from storage device 170 into ROM 152 on the basis of reception of a command for executing control program 172. RAM 153 functions as working memory, and temporarily stores various data required for executing control program 172.

To communication interface 154, LAN, an antenna and the like are connected. PLC 150 is connected to network NW1 via communication interface 154. Thus, PLC 150 exchanges data with an external device connected to network NW1. The external device includes, for example, management device 100, a server (not shown) and the like.

Communication interface 155 is an interface for connecting to network NW2 which is a filed network. PLC 150 exchanges data with an external device connected to network NW2 via communication interface 155. The external device includes, for example, remote I/O units 71 to 73 described above.

Storage device 170 is, for example, a storage medium such as hard disc or flush memory. Storage device 170 stores control program 172 and the like. The storage location of control program 172 is not limited to storage device 170, and these may be stored in a storage area of control circuit 151 (for example, cash area and the like), ROM 152, RAM 153, an external device (for example, server) and the like.

Control program 172 is a program for realizing part or all of the functional constituents shown in Fig. 4. Control program 172 may be provided as a part of a desired program to which it is incorporated, rather than as a single program. In this case, the control process according to the present embodiment is realized in cooperation with the desired program. Such a program without some module does not apart from the scope of control program 172 according to the present embodiment. Further, part or all of the functions provided by control program 172 may be realized by dedicated hardware. Further, PLC 150 may be configured in a form of a so-called cloud service in which at least one server executes part of the process of control program 172.

### <I. Hardware configuration of operation terminal 200A>

Referring to Fig. 11, hardware configuration of operation terminal 200A shown in Fig. 1 is described. Fig. 11 is a diagram showing one example of hardware configuration of operation terminal 200A.

Operation terminal 200A includes a control circuit 201, a ROM 202, a RAM 203, a communication interface 204, a display interface 205, an input interface 207, and a storage device 220. These components are connected to a bus 210.

Control circuit 201 is configured, for example, by at least one integrated circuit. The integrated circuit can be configured, for example, by at least one CPU, at least one GPU, at least one ASIC, at least one FPGA or combination thereof or the like.

Control circuit 201 controls operations of operation terminal 200A by executing a control program 222 and various programs of an operating system or the like. Control circuit 201 reads out control program 222 from storage device 220 or ROM 202 into RAM 203 on the basis of reception of a command for executing control program 222. RAM 203 functions as working memory, and temporarily stores various data required for executing control program 222.

To communication interface 204, LAN, an antenna and the like are connected. Operation terminal 200A is connected to network NW1 via communication interface 204. Thus, operation terminal 200A exchanges data with an external device connected to network NW1. The external device includes, for example, PLC 150, a server (not shown) and the like.

To display interface 205, a display 206 is connected. Display interface 205 transmits an image signal for displaying an image to display 206 according to a command from control circuit 201 or the like. Display 206 displays, for example, an operation screen for receiving a collection instruction for tool holder, a tool selection screen for designating a tool holder to be carried-in, or a machine tool selection screen for designating machine tool 400 that is a carrying-in destination, and so on. Display 206 is, for example, a liquid crystal display, an inorganic EL display, or other display device. Display 206 may be configured integrally with operation terminal 200A, and may be configured separately from operation terminal 200A.

To input interface 207, an input device 208 is connected. Input device 208 is, for example, a mouse, a keyboard, a touch panel, or other device capable of receiving an operation by a user. Input device 208 may be configured integrally with operation terminal 200A, and may be configured separately from operation terminal 200A.

Storage device 220 is, for example, a storage medium such as hard disc or flush memory. Storage device 220 stores control program 222 and storage information 224, and so on. Storage information 224 may be stored in management device 100 or PLC 150. The storage location of these is not limited to storage device 220, and these may be stored in a storage area of control circuit 201 (for example, cash memory and the like), ROM 202, RAM 203, management device 100, PLC 150, or external devices (such as a server) and the like.

Control program 222 is a program for realizing part or all of the functional constituents shown in Fig. 4. Control program 222 may be provided as a part of a desired program to which it is incorporated rather than as a single program. In this case, the control process by control program 222 is realized in cooperation with the desired program. Such a program without some module does not apart from the scope of control program 222 according to the present embodiment. Further, part or all of the functions provided by control program 222 may be realized by dedicated hardware. Further, operation terminal 200A may be configured in a form of a so-called cloud service in which at least one server executes part of the process of control program 222.

### <K. Tool holder carrying-in flow>

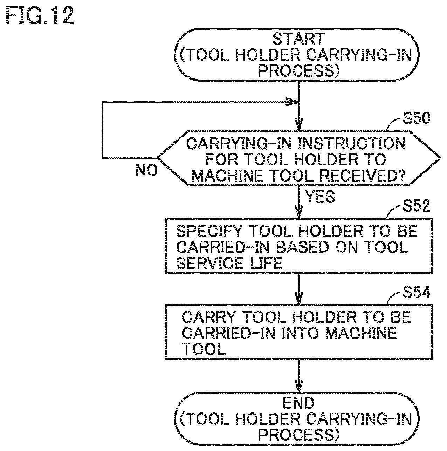

Next, referring to Fig. 12, a control flow concerning a carrying-in process of tool holder is described. Fig. 12 is a flowchart showing a flow of a tool holder carrying-in process to machine tool 400.

The process shown in Fig. 12 is realized by execution of the control program by controller 50. In other aspect, part or all the process may be executed by a circuit element or other hardware.

In step S50, controller 50 determines whether or not a carrying-in instruction for tool holder to machine tool 400 is received. The carrying-in instruction includes, for example, designation of a machine tool 400 that is a carrying-in destination, and designation of a kind of tool to be carried-in. Controller 50 switches the control to step S52 when it determines that a carrying-in instruction for tool holder to machine tool 400 is received (YES in step S50). If it is not so (NO in step S50), controller 50 again executes the process in step S50.

In step S52, controller 50 functions as tool-to-be-carried-in specifying unit 60 (see Fig. 4) described above, and specifies a tool holder to be carried-in on the basis of the residual service life of each tool when there are a plurality of tools designated as a tool to be carried-in. As one example, controller 50 determines a tool holder holding a tool having the shortest residual service life as a tool holder to be carried-in. The residual service life of the tool can be specified on the basis of storage information 224 described above.

In step S54, controller 50 functions as carrying-in controlling unit 62 (see Fig. 4) described above, and controls transport device 300 so as to carry the tool holder to be carried-in specified in step S52 into machine tool 400 that is a transport destination from work station 200 or tool storage unit 250.

### <L. Tool holder carrying-in flow>

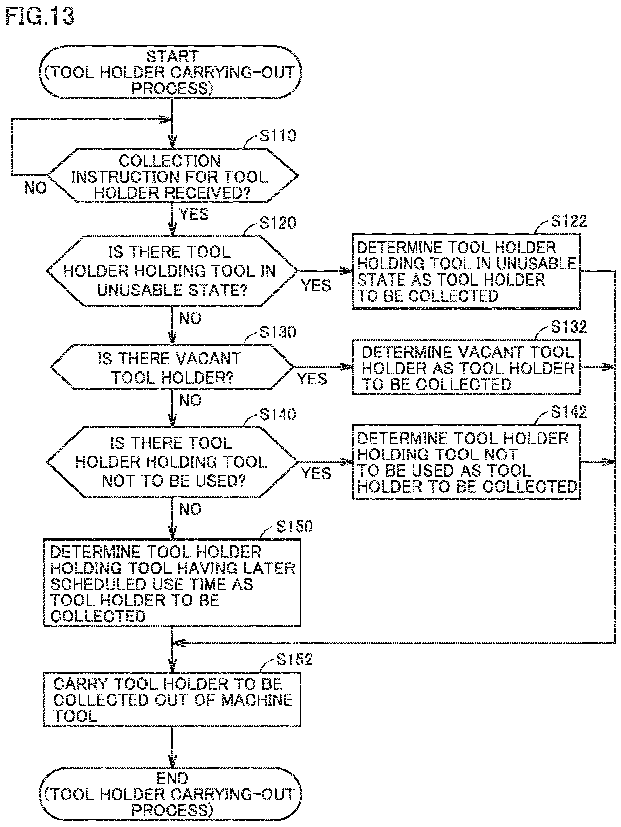

Next, referring to Fig. 13, a control flow concerning a carrying-out process of tool holder is described. Fig. 13 is a flowchart showing a flow of a tool holder carrying-out process from machine tool 400.

The process shown in Fig. 13 is realized by execution of the control program by controller 50. In other aspect, part or all the process may be executed by a circuit element or other hardware.

In step S110, controller 50 determines whether or not a collection instruction for tool holder is received. As one example, the collection instruction is received by various input devices provided in management device 100, operation terminal 200A, or machine tool 400. Controller 50 switches the control to step S120 when it determines that a collection instruction for tool holder is received (YES in step S110). If it is not so (NO in step S110), controller 50 again executes the process in step S110.

In step S120, controller 50 functions as tool-to-be-carried-out specifying unit 54 (see Fig. 4) described above, and determines whether or not there is a tool holder holding a tool in an unusable state among tool holders in machine tool 400 by referring to storage information 224 described above. Controller 50 switches the control to step S122 when it determines that there is a tool holder holding a tool in an unusable state (YES in step S120). If it is not so (NO in step S120), controller 50 switches the control to step S130.

In step S122, controller 50 determines a tool holder holding a tool in an unusable state as a tool holder to be collected.

In step S130, controller 50 functions as tool-to-be-carried-out specifying unit 54 described above, and determines whether or not there is a vacant tool holder holding no tool among tool holders in machine tool 400 by referring to storage information 224 described above. Controller 50 switches the control to step S132 when it determines that there is a vacant tool holder (YES in step S130). If it is not so (NO in step S130), controller 50 switches the control to step S140.

In step S132, controller 50 determines a vacant tool holder as a tool holder to be collected.

In step S140, controller 50 functions as tool-to-be-carried-out specifying unit 54 described above, and determines whether or not there is a tool holder holding a tool not to be used among tool holders in machine tool 400 on the basis of each machining program of machine tool 400. Controller 50 switches the control to step S142 when it determines that there is a tool holder holding a tool not to be used (YES in step S140). If it is not so (NO in step S140), controller 50 switches the control to step S150.

In step S142, controller 50 determines a tool holder holding a tool not to be used as a tool holder to be collected.

In step S150, controller 50 functions as tool-to-be-carried-out specifying unit 54 described above, and determines the tool holder holding a tool whose scheduled use time is latest as a tool holder to be collected.

In step S152, controller 50 functions as carrying-out controlling unit 56 described above, and controls transport device 300 so as to carry the tool holder determined as a tool holder to be collected out of machine tool 400. Thereafter, controller 50 controls transport device 300 such that the tool holder carried out of machine tool 400 is transported to work station 200 or tool storage unit 250.

In the above description, while the case of determining only one tool holder as a tool holder to be collected has been described, there may be a plurality of tool holders determined as a tool holder to be collected. In this case, steps S120, S122, S130, S132, S140, S142, S150 are executed again with the exception of the tool holder having determined as a tool holder to be collected.

### <M. Conclusion>

In the manner as described above, tool transport system 10 specifies a tool holder holding a tool in an unusable state as a tool holder to be collected among tool holders in machine tool 400. Thus, the tool holder holding a tool in an unusable state is collected at a higher priority than other tool holders.

Accordingly, tool transport system 10 is capable of securing a storage space for tool holder in machine tool 400. Only a blade part is exchangeable for some kind of tool. The tool can be reused by changing only the damaged blade part. By collecting a tool holder holding such a tool at a higher priority, the operator can shorten the time of preparing the tool, and can reuse the tool holder quickly.

It is to be understood that the embodiments disclosed herein are illustrative, but are not restrictive in every respect. The scope of the present invention is indicated by the appended claims rather than by the description described above.

### REFERENCE SIGNS LIST

10: tool transport system, 50: controller, 52: monitoring unit, 54: tool-to-be-carried-out specifying unit, 56: carrying-out controlling unit, 60: tool-to-be-carried-in specifying unit, 62: carrying-in controlling unit, 71, 72, 73: remote I/O unit, 100: management device, 101, 151, 201: control circuit, 102, 152, 202: ROM, 103, 153, 203: RAM, 104, 154, 155, 204: communication interface, 105, 205: display interface, 106, 206: display, 107, 207: input interface, 108, 208: input device, 110, 160, 210: bus, 120, 170, 220: storage device, 122, 172, 222: control program, 200: work station, 200A: operation terminal, 224: storage information, 234, 234A, 234B, 334, 334A, 334B, 411, 411A, 411B: motor driver, 235, 235A, 235B, 335, 335A, 335B, 412, 412A, 412B: motor, 238, 438: ATC, 250: tool storage unit, 300: transport device, 330: arm robot, 331: rail, 332: carriage, 336: temporary placing area, 400, 400A to 400F: machine tool

## Claims

1. A tool transport system (10) comprising:
a machine tool (400); and
a tool storage unit (250) that stores a plurality of tool holders,
each of the plurality of tool holders being capable of holding a tool,
the tool transport system (10) further comprising:
a work station (200) for an operator to conduct an operation concerning a tool holder;
a transport device (300) that transports a designated tool holder among tool holders in the machine tool (400), tool holders in the tool storage unit (250), and tool holders in the work station (200), to a designated transport destination of the machine tool (400), the tool storage unit (250) and the work station (200); and
a controller that controls the tool transport system (10),
the controller executing:
a process of specifying a tool holder holding a tool in an unusable state among tool holders in the machine tool (400) based on receiving a collection instruction for tool holder;
a process of controlling the transport device (300) so as to carry the tool holder specified in the process of specifying out of the machine tool (400) at a higher priority than other tool holders in the machine tool (400), wherein the other tool holders in the machine tool (400) include a vacant tool holder holding no tool; and
a process of controlling the transport device (300) so as to transport the tool holder carried out of the machine tool (400) in the process of controlling to the tool storage unit (250) or the work station (200),

2. The tool transport system (10) according to claim 1, wherein
the other tool holders in the machine tool (400) include a tool holder holding a tool in a usable state, and
when there is no tool holder holding a tool in an unusable state in the machine tool (400), the controller further executes a process of controlling the transport device (300) so as to carry the vacant tool holder out of the machine tool (400) at a higher priority than a tool holder holding a tool in a usable state.

3. The tool transport system (10) according to claim 2, wherein the other tool holders in the machine tool (400) include:
a tool holder holding a tool not to be used in the machine tool (400); and
a tool holder holding a tool to be used in the machine tool (400), and
when there is no tool holder holding a tool in an unusable state, and there is no vacant tool holder in the machine tool (400), the controller further executes a process of controlling the transport device (300) so as to carry the tool holder holding a tool not to be used out of the machine tool (400) at a higher priority than the tool holder holding a tool to be used,
wherein the controller is configured to determine whether a tool is not to be used on the basis of a machining program of the machine tool (400).

4. The tool transport system (10) according to any one of claims 1 to 3, wherein
the tool holders stored in the tool storage unit (250) include:
a first tool holder holding a first tool; and
a second tool holder holding a second tool having a shorter residual service life than the first tool, and
the controller executes a process of controlling the transport device (300) so as to carry the second tool holder into the machine tool (400) at a higher priority than the first tool holder based on receiving a carrying-in instruction for tool holder.

5. A control method for a tool transport system (10), the tool transport system (10) comprising:
a machine tool (400); and
a tool storage unit (250) that stores a plurality of tool holders,
each of the plurality of tool holders being capable of holding a tool,
the tool transport system (10) further comprising:
a work station (200) for an operator to conduct an operation concerning a tool holder; and
a transport device (300) that transports a designated tool holder among tool holders in the machine tool (400), tool holders in the tool storage unit (250), and tool holders in the work station (200), to a designated transport destination of the machine tool (400), the tool storage unit (250) and the work station (200),
the control method comprising:
specifying a tool holder holding a tool in an unusable state among tool holders in the machine tool (400) based on receiving a collection instruction for tool holder;
controlling the transport device (300) so as to carry the tool holder specified in the specifying out of the machine tool (400) at a higher priority than other tool holders in the machine tool (400), wherein the other tool holders in the machine tool (400) include a vacant tool holder holding no tool; and
controlling the transport device (300) so as to transport the tool holder carried out of the machine tool (400) in the controlling to the tool storage unit (250) or the work station (200).

6. A control program for a tool transport system (10), the tool transport system (10) comprising:
a machine tool (400); and
a tool storage unit (250) that stores a plurality of tool holders,
each of the plurality of tool holders being capable of holding a tool,
the tool transport system (10) further comprising:
a work station (200) for an operator to conduct an operation concerning a tool holder; and
a transport device (300) that transports a designated tool holder among tool holders in the machine tool (400), tool holders in the tool storage unit (250), and tool holders in the work station (200), to a designated transport destination of the machine tool (400), the tool storage unit (250) and the work station (200),
the control program causing the tool transport system (10) execute:
specifying a tool holder holding a tool in an unusable state among tool holders in the machine tool (400) based on receiving a collection instruction for tool holder;
controlling the transport device (300) so as to carry the tool holder specified in the specifying out of the machine tool (400) at a higher priority than other tool holders in the machine tool (400), wherein the other tool holders in the machine tool (400) include a vacant tool holder holding no tool; and
controlling the transport device (300) so as to transport the tool holder carried out of the machine tool (400) in the controlling to the tool storage unit (250) or the work station (200).

## Patentansprüche

1. Werkzeugtransportsystem (10), umfassend:
eine Werkzeugmaschine (400); und
eine Werkzeugaufbewahrungseinheit (250), die mehrere Werkzeughalter aufbewahrt,
wobei jeder der mehreren Werkzeughalter in der Lage ist, ein Werkzeug zu halten,
wobei das Werkzeugtransportsystem (10) des Weiteren umfasst:
eine Arbeitsstation (200), an der ein Bediener eine Operation in Bezug auf einen Werkzeughalter durchführen kann;
eine Transportvorrichtung (300), die einen bezeichneten Werkzeughalter unter Werkzeughaltern in der Werkzeugmaschine (400), Werkzeughaltern in der Werkzeugaufbewahrungseinheit (250) und Werkzeughaltern in der Arbeitsstation (200) zu einem bezeichneten Transportbestimmungsort der Werkzeugmaschine (400), der Werkzeugaufbewahrungseinheit (250) und der Arbeitsstation (200) transportiert; und
eine Steuerung, der das Werkzeugtransportsystem (10) steuert,
wobei die Steuerung ausführt:
einen Prozess des Spezifizierens eines Werkzeughalters, der ein Werkzeug in einem nicht-verwendbaren Zustand hält, unter Werkzeughaltern in der Werkzeugmaschine (400) auf der Grundlage des Empfangens einer Holanweisung für den Werkzeughalter;
einen Prozess des Steuerns der Transportvorrichtung (300), den in dem Prozess des Spezifizierens spezifizierten Werkzeughalter mit einer höheren Priorität aus der Werkzeugmaschine (400) herauszuführen als andere Werkzeughalter in der Werkzeugmaschine (400), wobei die anderen Werkzeughalter in der Werkzeugmaschine (400) einen freien Werkzeughalter aufweisen, der kein Werkzeug hält; und
einen Prozess des Steuerns der Transportvorrichtung (300), den Werkzeughalter, der in dem Prozess des Steuerns aus der Werkzeugmaschine (400) herausgeführt wurde, zu der Werkzeugaufbewahrungseinheit (250) oder der Arbeitsstation (200) zu transportieren.

2. Werkzeugtransportsystem (10) nach Anspruch 1, wobei die anderen Werkzeughalter in der Werkzeugmaschine (400) einen Werkzeughalter aufweisen, der ein Werkzeug in einem verwendbaren Zustand hält, und
wenn sich in der Werkzeugmaschine (400) kein Werkzeughalter befindet, der ein Werkzeug in einem nicht-verwendbaren Zustand hält, die Steuerung des Weiteren einen Prozess des Steuerns der Transporteinrichtung (300) ausführt, den freien Werkzeughalter mit einer höheren Priorität aus der Werkzeugmaschine (400) herauszuführen als einen Werkzeughalter, der ein Werkzeug in einem verwendbaren Zustand hält.

3. Werkzeugtransportsystem (10) nach Anspruch 2, wobei
die anderen Werkzeughalter in der Werkzeugmaschine (400) aufweisen:
einen Werkzeughalter, der ein Werkzeug hält, das in der Werkzeugmaschine (400) nicht zu verwenden ist; und
einen Werkzeughalter, der ein Werkzeug hält, das in der Werkzeugmaschine (400) zu verwenden ist, und
wenn sich in der Werkzeugmaschine (400) weder ein Werkzeughalter, der ein Werkzeug in einem nicht-verwendbaren Zustand hält, noch ein freier Werkzeughalter befindet, die Steuerung des Weiteren einen Prozess des Steuerns der Transportvorrichtung (300) ausführt, den Werkzeughalter, der ein Werkzeug hält, das nicht zu verwenden ist, mit einer höheren Priorität aus der Werkzeugmaschine (400) herauszuführen als den Werkzeughalter, der ein Werkzeug hält, das zu verwenden ist,
wobei die Steuerung dazu eingerichtet ist, auf der Grundlage eines Bearbeitungsprogramms der Werkzeugmaschine (400) zu bestimmen, ob ein Werkzeug nicht zu verwenden ist.

4. Werkzeugtransportsystem (10) nach einem der Ansprüche 1 bis 3, wobei
die in der Werkzeugaufbewahrungseinheit (250) aufbewahrten Werkzeughalter aufweisen:
einen ersten Werkzeughalter, der ein erstes Werkzeug hält; und
einen zweiten Werkzeughalter, der ein zweites Werkzeug hält, das eine kürzere Reststandzeit als das erste Werkzeug aufweist, und
die Steuerung, auf der Grundlage des Empfangens einer Ladeanweisung für den Werkzeughalter, einen Prozess des Steuerns der Transportvorrichtung (300) ausführt, den zweiten Werkzeughalter mit einer höheren Priorität in die Werkzeugmaschine (400) zu laden als den ersten Werkzeughalter.

5. Steuerungsverfahren für ein Werkzeugtransportsystem (10), wobei das Werkzeugtransportsystem (10) umfasst:
eine Werkzeugmaschine (400); und
eine Werkzeugaufbewahrungseinheit (250), die mehrere Werkzeughalter aufbewahrt,
wobei jeder der mehreren Werkzeughalter in der Lage ist, ein Werkzeug zu halten,
wobei das Werkzeugtransportsystem (10) des Weiteren umfasst:
eine Arbeitsstation (200), an der ein Bediener eine Operation in Bezug auf einen Werkzeughalter durchführen kann; und
eine Transportvorrichtung (300), die einen bezeichneten Werkzeughalter unter Werkzeughaltern in der Werkzeugmaschine (400), Werkzeughaltern in der Werkzeugaufbewahrungseinheit (250) und Werkzeughaltern in der Arbeitsstation (200) zu einem bezeichneten Transportbestimmungsort der Werkzeugmaschine (400), der Werkzeugaufbewahrungseinheit (250) und der Arbeitsstation (200) transportiert,
wobei das Steuerungsverfahren umfasst:
Spezifizieren eines Werkzeughalters, der ein Werkzeug in einem nicht-verwendbaren Zustand hält, unter Werkzeughaltern in der Werkzeugmaschine (400) auf der Grundlage des Empfangens einer Holanweisung für den Werkzeughalter;
Steuern der Transportvorrichtung (300), den in dem Spezifizieren spezifizierten Werkzeughalter mit einer höheren Priorität aus der Werkzeugmaschine (400) herauszuführen als andere Werkzeughalter in der Werkzeugmaschine (400), wobei die anderen Werkzeughalter in der Werkzeugmaschine (400) einen freien Werkzeughalter aufweisen, der kein Werkzeug hält; und
Steuern der Transportvorrichtung (300), den Werkzeughalter, der in dem Steuern aus der Werkzeugmaschine (400) herausgeführt wurde, zu der Werkzeugaufbewahrungseinheit (250) oder der Arbeitsstation (200) zu transportieren.

6. Steuerungsprogramm für ein Werkzeugtransportsystem (10), wobei das Werkzeugtransportsystem (10) umfasst:
eine Werkzeugmaschine (400); und
eine Werkzeugaufbewahrungseinheit (250), die mehrere Werkzeughalter aufbewahrt,
wobei jeder der mehreren Werkzeughalter in der Lage ist, ein Werkzeug zu halten,
wobei das Werkzeugtransportsystem (10) des Weiteren umfasst:
eine Arbeitsstation (200), an der ein Bediener eine Operation in Bezug auf einen Werkzeughalter durchführen kann; und
eine Transportvorrichtung (300), die einen bezeichneten Werkzeughalter unter Werkzeughaltern in der Werkzeugmaschine (400), Werkzeughaltern in der Werkzeugaufbewahrungseinheit (250) und Werkzeughaltern in der Arbeitsstation (200) zu einem bezeichneten Transportbestimmungsort der Werkzeugmaschine (400), der Werkzeugaufbewahrungseinheit (250) und der Arbeitsstation (200) transportiert,
wobei das Steuerungsprogramm das Werkzeugtransportsystem (10) veranlasst auszuführen:
Spezifizieren eines Werkzeughalters, der ein Werkzeug in einem nicht-verwendbaren Zustand hält, unter Werkzeughaltern in der Werkzeugmaschine (400) auf der Grundlage des Empfangens einer Holanweisung für den Werkzeughalter;
Steuern der Transportvorrichtung (300), den in dem Spezifizieren spezifizierten Werkzeughalter mit einer höheren Priorität aus der Werkzeugmaschine (400) herauszuführen als andere Werkzeughalter in der Werkzeugmaschine (400), wobei die anderen Werkzeughalter in der Werkzeugmaschine (400) einen freien Werkzeughalter aufweisen, der kein Werkzeug hält; und
Steuern der Transportvorrichtung (300), den Werkzeughalter, der in dem Steuern aus der Werkzeugmaschine (400) herausgeführt wurde, zu der Werkzeugaufbewahrungseinheit (250) oder der Arbeitsstation (200) zu transportieren.

## Revendications

1. Système de transport d'outils (10) comprenant :
une machine-outil (400) ; et
une unité de stockage d'outils (250) qui stocke une pluralité de porte-outils,
chaque porte-outil de la pluralité de porte-outils étant apte à porter un outil,
le système de transport d'outils (10) comprenant en outre :
un poste de travail (200) permettant à un opérateur de réaliser une opération quant à un porte-outil ;
un dispositif de transport (300) qui transporte un porte-outil désigné parmi des porte-outils dans la machine-outil (400), des porte-outils dans l'unité de stockage d'outils (250), et des porte-outils dans le poste de travail (200), jusqu'à une destination de transport désignée de la machine-outil (400), de l'unité de stockage d'outils (250), et du poste de travail (200) ; et
une commande qui commande le système de transport d'outils (10),
la commande exécutant :
un processus de spécification d'un porte-outil portant un outil dans un état inutilisable parmi des porte-outils dans la machine-outil (400), sur la base de la réception d'une instruction de prise pour un porte-outil ;
un processus de commande du dispositif de transport (300) de manière à extraire le porte-outil spécifié dans le processus de spécification hors de la machine-outil (400) à une priorité plus élevée que d'autres porte-outils dans la machine-outil (400), dans lequel les autres porte-outils dans la machine-outil (400) comportant un porte-outil inoccupé ne portant aucun outil ; et
un processus de commande du dispositif de transport (300) de manière à transporter le porte-outil extrait hors de la machine-outil (400) dans le processus de commande jusqu'à l'unité de stockage d'outils (250) ou au poste de travail (200).

2. Système de transport d'outils (10) selon la revendication 1, dans lequel les autres porte-outils dans la machine-outil (400) comportant un porte-outil portant un outil dans un état utilisable, et
lorsqu'il n'y a aucun porte-outil portant un outil dans un état inutilisable dans la machine-outil (400), la commande exécute en outre un processus de commande du dispositif de transport (300) de manière à extraire le porte-outil inoccupé hors de la machine-outil (400) à une priorité plus élevée qu'un porte-outil portant un outil dans un état utilisable.

3. Système de transport d'outils (10) selon la revendication 2, dans lequel les autres porte-outils dans la machine-outil (400) comportent :
un porte-outil portant un outil à ne pas utiliser dans la machine-outil (400) ; et
un porte-outil portant un outil à utiliser dans la machine-outil (400), et
lorsqu'il n'y a aucun porte-outil portant un outil dans un état inutilisable, et qu'il n'y a aucun porte-outil inoccupé dans la machine-outil (400), la commande exécute en outre un processus de commande du dispositif de transport (300) de manière à extraire le porte-outil portant un outil à ne pas utiliser hors de la machine-outil (400) à une priorité plus élevée que le porte-outil portant un outil à utiliser,
dans lequel la commande est configurée pour déterminer si un outil ne doit pas être utilisé sur la base d'un programme d'usinage de la machine-outil (400).

4. Système de transport d'outils (10) selon l'une quelconque des revendications 1 à 3, dans lequel
les porte-outils stockés dans l'unité de stockage d'outils (250) comportent :
un premier porte-outil portant un premier outil ; et
un second porte-outil portant un second outil ayant une durée d'utilisation résiduelle plus courte que le premier outil, et
la commande exécute un processus de commande du dispositif de transport (300) de manière à introduire le second porte-outil dans la machine-outil (400) à une priorité plus élevée que le premier porte-outil sur la base de la réception d'une instruction d'introduction pour le porte-outil.

5. Procédé de commande pour un système de transport d'outils (10), le système de transport d'outils (10) comprenant :
une machine-outil (400) ; et
une unité de stockage d'outils (250) qui stocke une pluralité de porte-outils,
chaque porte-outil de la pluralité de porte-outils étant apte à porter un outil,
le système de transport d'outils (10) comprenant en outre :
un poste de travail (200) permettant à un opérateur de réaliser une opération quant à un porte-outil ; et
un dispositif de transport (300) qui transporte un porte-outil désigné parmi des porte-outils dans la machine-outil (400), des porte-outils dans l'unité de stockage d'outils (250), et des porte-outils dans le poste de travail (200), jusqu'à une destination de transport désignée de la machine-outil (400), de l'unité de stockage d'outils (250), et du poste de travail (200),
le procédé de commande comprenant de :
spécifier un porte-outil portant un outil dans un état inutilisable parmi des porte-outils dans la machine-outil (400), sur la base de la réception d'une instruction de prise pour un porte-outil ;
commander le dispositif de transport (300) de manière à extraire le porte-outil spécifié dans la spécification hors de la machine-outil (400) à une priorité plus élevée que d'autres porte-outils dans la machine-outil (400), dans lequel les autres porte-outils dans la machine-outil (400) comportent un porte-outil inoccupé ne portant aucun outil ; et
commander le dispositif de transport (300) de manière à transporter le porte-outil extrait hors de la machine-outil (400) pendant la commande jusqu'à l'unité de stockage d'outils (250) ou jusqu'au poste de travail (200).

6. Programme de commande pour un système de transport d'outils (10), le système de transport d'outils (10) comprenant :
une machine-outil (400) ; et
une unité de stockage d'outils (250) qui stocke une pluralité de porte-outils,
chaque porte-outil de la pluralité de porte-outils étant apte à porter un outil,
le système de transport d'outils (10) comprenant en outre :
un poste de travail (200) permettant à un opérateur de réaliser une opération quant à un porte-outil ; et
un dispositif de transport (300) qui transporte un porte-outil désigné parmi des porte-outils dans la machine-outil (400), des porte-outils dans l'unité de stockage d'outils (250), et des porte-outils dans le poste de travail (200), jusqu'à une destination de transport désignée de la machine-outil (400), de l'unité de stockage d'outils (250), et du poste de travail (200),
le programme de commande amenant le système de transport d'outils (10) à exécuter :
la spécification d'un porte-outil portant un outil dans un état inutilisable parmi des porte-outils dans la machine-outil (400), sur la base de la réception d'une instruction de prise pour un porte-outil ;
la commande du dispositif de transport (300) de manière à extraire le porte-outil spécifié dans la spécification hors de la machine-outil (400) à une priorité plus élevée que d'autres porte-outils dans la machine-outil (400), dans lequel les autres porte-outils dans la machine-outil (400) comportent un porte-outil inoccupé ne portant aucun outil ; et
la commande du dispositif de transport (300) de manière à transporter le porte-outil extrait hors de la machine-outil (400) pendant la commande jusqu'à l'unité de stockage d'outils (250) ou jusqu'au poste de travail (200).
